# EUROPEAN PATENT SPECIFICATION

(11) **EP 1 717 773 B1**
(45) Date of publication and mention of the grant of the patent: **31.12.2008**
(21) Application number: 06110026.9
(22) Date of filing: 16.02.2006
(51) Int. Cl.: G08B 13/14, B65D 55/02, G06K 19/07, G09F 3/02

(54) **System and method of tamper detection**
System und Verfahren zur Manipulationsdetektion
Système et procédé de détection de fraude

(30) Priority: 20.04.2005 EP 05300300
(43) Date of publication of application: 02.11.2006
(73) Proprietor: International Business Machines Corporation, Armonk, NY 10504 (US)
(72) Inventor: Commagnac, François, 06000 Nice (FR); Mestres, Jean Christophe, 06140 Vence (FR); Picon, Joaquin, 06700 St Laurent du Var (FR); Secondo, Pierre, 06140 Tourrettes sur Loup (FR)
(74) Representative: Etorre, Yves Nicolas

(56) References cited:
- WO-A-20/05024745
- US-A- 6 069 563
- US-A1- 2004 066 296

## Description

### Field of Invention

The present invention relates to a system and method of tamper detection and in particular, to a system and method employing a radio frequency identification (RFID) tag.

### Background Art

Recent studies have shown that, at present, 80% of the pharmaceuticals being globally developed are biological products such as bio-therapeutic agents (e.g. vaccines) or biological supplies/samples (e.g. blood, serum etc.). These products typically cost ten times more than traditional products to handle during manufacture and transport through the supply chain. These additional costs arise because biological products are often sensitive to environmental conditions and thus require specialised handling. For instance, many biological products (e.g. enzymes) are temperature-sensitive and must be handled and stored at low temperatures. Similarly, other biological products are sensitive to the presence of oxygen or other ambient gases. Consequently, these products must be handled and stored in an air-free environment. If a biological product is exposed to a particular environmental condition or agent during manufacture, storage or transport, the biological product may react therewith and decay more rapidly than predicted by its official expiration date. Consequently, the safety of such products is brought into doubt.

To further complicate the matter, biological products are typically transported in smaller quantities than traditional products. It is also envisaged that even smaller quantities of these products will be routinely transported in the future. Consequently, a major problem facing the pharmaceutical industry is improving control over the handling of biological products whilst lowering their overall transport cost.

Security seals can be roughly divided into three types, namely tamper-evident seals, barrier seals and electronic seals. Tamper-evident seals do not secure items against tampering. Instead, a tamper-evident seal provides evidence of ingress or contamination of an item to which it is attached.
Tamper-evident seals are typically simple seals such as frangible foils or films, crimped cables or other (theoretically) irreversible mechanical assemblies. Tamper detection is typically based on a manual inspection of the tamper evident seal. However, whilst this process is acceptable for a small number of items, it is not practical or reliable for a large number of items.

In contrast with tamper-evident seals, electronic security seals actively monitor for tampering and provide a real-time alert in the event that tampering occurs. Consequently, electronic security seals facilitate rapid, convenient and cost-effective control over the handling and storage of an item without requiring manual intervention.

Electronic security seals typically require a source of power. For instance, US5111184 describes a device in which a fiber optic cable is connected between a fixed member and a movable member of a container so that the cable is bent when the container is opened and closed. Light pulses are transmitted through the cable and variations in the pulses resulting from bending of the cable are detected to indicate the opening and closing of the container. The device in US5111184 is powered by a battery pack. However, the inclusion of a power supply in an electronic security seal increases the cost, size and weight of the seal.

Passive RFID tags do not have their own power supply. Instead, these devices possess an antenna that capture the power from an incoming radio-frequency (RF) scan (in the form of a minute electrical current induced in the antenna). This provides enough power for the tag to send a response to the received RF scan. Since a passive RFID tag does not need its own power supply, a tag can be designed with very small dimensions. For instance, US6275157 describes an RFID transponder that is embedded in the glass of a vehicle windshield.

US6720866 describes an RFID tag device with a sensor input adapted to receive variable signals from a switch(es), an analog variable or a digital variable. Whilst the device described in US6720866 could be adapted to include a sensor specifically designed to detect the opening of a container, it would also be necessary to include several logic circuits to handle the signals therefrom. However, the inclusion of these logic circuits would make the device quite complex and thus expensive to manufacture.

W002095655 describes a tamper-indicating label comprising a tamper track coupled to an RFID component. In one embodiment, the adhesion characteristics of the tamper track are adapted to break apart the tamper track when the label is tampered with. In a similar vein, CA2417616 describes a tamper-indicating RFID label designed to permit the destruction of the label in the event of an attempt to remove the label from a surface. In particular, an adhesion modifying coating is applied to portions of the label to affect the relative adhesion strength therebetween and thereby enable differential separation of the label from a surface in the event of an attempt to remove the label therefrom.

Systems such as those described in CA2417616 and W002095655 could be used to detect the removal of a container cap by applying the label to the container so that one part of the label is attached to the cap and the other part is attached to the container. With this arrangement, the label must be peeled off the container in order to remove the cap. However, these systems detect the removal of the label, rather than the specific operation of opening the container. Consequently, these systems may be less secure than a system based on the direct detection of the opening of a container. On the other hand, a very complex label manufacturing and fixing process would be needed to enable the direct (absolute) detection of container opening.

WO 2005/024745 provides other embodiments of RFID tags used for detecting tampering with a container.

### Summary of the Invention

The present invention is directed to a system and method as defined in the independent claims.

More particularly, the present invention discoses a tamper detection system comprising:
a passive electronic sensor including a circuit means having three nodes;
a load connected between the first and second nodes of the circuit means;
a friable connection means connected between the second and third nodes; and
a means of storing an identification code of the sensor connected to the second node of the circuit means;
wherein in use a voltage is applied across the first and third nodes and wherein when the friable connection means is intact, the second node is at a first voltage and when the friable connection means is broken, the second node is at a second voltage.

Further embodiments of the invention are provided in the appended claims.

Advantages of this invention are set out in detail in the description.

In particular, the present invention provides a means of improving control over the handling of a sensitive product by making it possible to remotely and automatically interrogate (without requiring visual inspection of) containers of the product to determine whether the containers have been tampered with. This facilitates rapid container integrity checking and leads to improved product safety because traditional mechanisms of determining whether a product has been tampered with are often prone to human error.

Other advantages and aspects of the invention can be seen in the accompanying claims and description.

### Reference to the Drawings

Reference will now be made by way of example, to the accompanying drawings in which:
Figure 1(a) is a side elevation view of the tamper detector attached to an unopened container;
Figure 1(b) is a perspective view of the tamper detector attached to an opened container;
Figure 2(a) is a circuit/logic diagram of a register in the tamper detector of Figure 1(a); and
Figure 2(b) is a circuit/logic diagram of the register in the tamper detector of Figure 1(b).

### Detailed Description

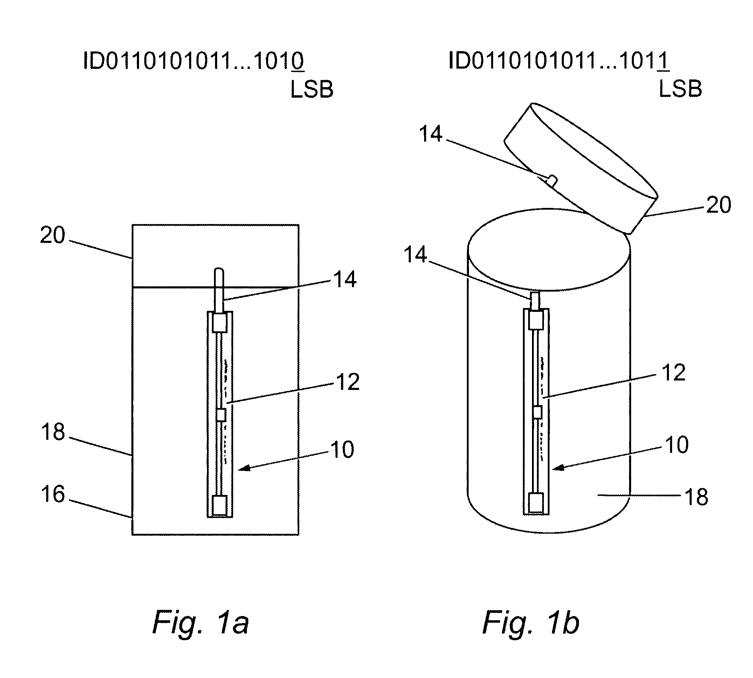

Referring to Figure 1(a) the tamper detector 10 comprises an RFID tag 12 with a memory register (not shown) and an external circuit in the form of a thin wire loop 14 coupled to the least significant bit (LSB) of the memory register. In use, the tamper detector 10 is attached to a container 16 comprising a first portion 18 being open at one end, and a cap 20 that is fittable over the open end of the first portion 18 to close the container 16.

The tamper detector 10 is attached to the container 16 in an arrangement in which the RFID tag 12 is stuck to (or embedded in) the first portion 18 and the thin wire loop 14 is attached to the cap 20. The thin wire loop 14 may be attached to the cap 20 by any of a variety of methods extending from simple adhesion with appropriate glue to inclusion of the thin wire loop 14 into a hole in the cap 20, which is then sealed using an epoxy-like cement. Referring to Figure 1(b), with this arrangement, in the event of an attempt to tamper with the container 16, the movement of the cap 20 (necessary to open the container 16) causes the thin wire loop 14 attached thereto to be broken.

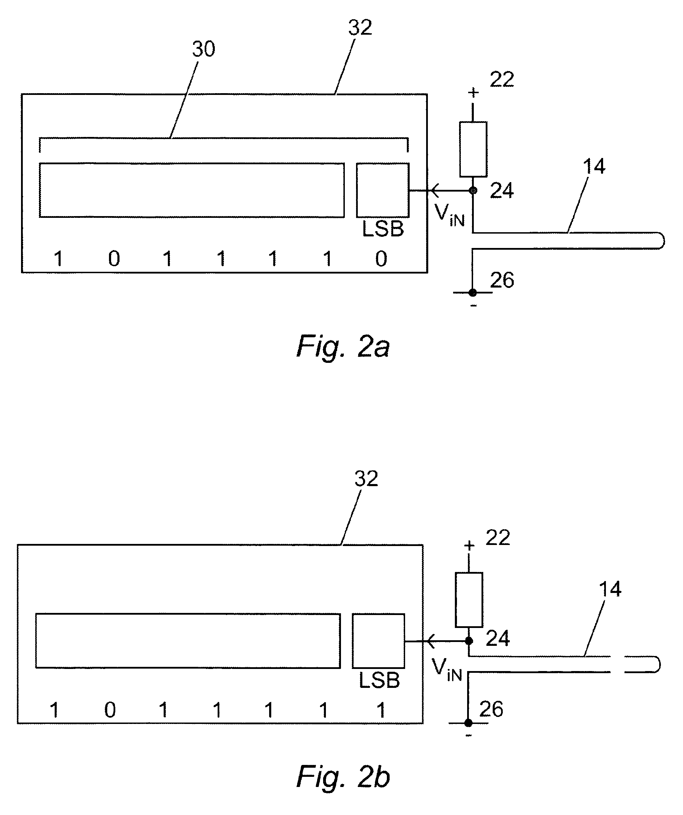

Referring to Figure 2(a) the RFID tag 12 comprises a circuit having three nodes 22, 24 and 26. The RFID tag's antenna (not shown) is connected to a load resistor R and the load resistor is in turn connected between nodes 22 and 26. An RFID tag can be identified by means of its ID number 30 which is generally stored in a memory (EEPROM or FRAM) in the RFID tag 12, and transferred to the tag's memory register 32 (on receipt of an incoming RF signal) for subsequent transmission to a reader (not shown). In the present case, the least significant bit (LSB) of the tag's memory register 32 is connected to node 24.

When the container is closed for the first time and sealed with the tamper detector, the thin wire loop 14 forms an electrical connection with the RFID tag 12, wherein the thin wire loop 14 is connected between nodes 24 and 26, to connect the voltage induced in the RFID tag's antenna (by an incoming RF signal) to ground. Accordingly, the electrical connection formed by the intact thin wire loop 14 ensures that the voltage setting the LSB of the tag's memory register has a low-level. This results in an even tag ID number 30.

However, referring to Figure 2(b), if the container is opened, the thin wire loop 14 and the electrical connection with the RFID tag 12 is broken (i.e. the voltage induced in the tag's antenna is not connected to ground). Consequently, the voltage setting the LSB of the tag's memory register 32 attains a high value. As a result, the tag ID number becomes an odd number.

In summary, a container's RFID tag answers a reader with an even identification code number after being closed for the first time and an odd number if the container has been opened. In other words, the breaking of the thin wire loop 14 modifies the response returned by the RFID tag 12 when read, so that, even if the container is reassembled into its original state, the tag will still report the opening of the container.

While the invention has been particulalry shown and described with reference to a preferred embodiment, it will be understood that various changes in form and detail may be made therein without departing from the scope of the invention.

## Claims

1. Tamper detection system comprising:
a passive electronic sensor (12) including a circuit means having three nodes (22, 24, 26);
a load connected between the first (22) and second (24) nodes of the circuit means;
a friable connection means (14) connected between the second (24) and third (26) nodes; and
a means (32) of storing an identification code of the sensor (12) connected to the second node of the circuit means;
wherein in use a voltage is applied across the first and third nodes and wherein when the friable connection means (14) is intact, the second node is at a first voltage and when the friable connection means (14) is broken, the second node is at a second voltage.

2. System as claimed in Claim 1 wherein the first voltage is substantially equal to zero.

3. System as claimed in Claim 1 wherein the second voltage is substantially equal to the applied voltage.

4. System as claimed in Claim 1 wherein the passive electronic sensor (12) is a radio frequency identification sensor.

5. System as claimed in any of the preceding Claims wherein the friable electrical connection means (14) is a wire loop.

6. System as claimed in any of the preceding Claims wherein the friable electrical connection means (14) is connectable to a bit of the sensor identification code storage means (32).

7. System as claimed in Claim 6 wherein a breakage in the friable electrical connection means (14) causes a change in the voltage at the sensor identification code storage means (32) which changes the value of its bit.

8. System as claimed in Claim 6 or Claim 7 wherein the bit of the sensor identification code storage means (32) is the least significant bit.

9. System as claimed in any of the preceding Claims wherein the sensor identification code has an even value when the friable connection means (14) is intact and an odd value when the friable connection means (14) is broken.

10. System as claimed in any one of Claims 1 to 8 wherein the sensor identification code has an odd value when the friable connection means (14) is intact and an even value when the friable connection means (14) is broken.

11. A container tamper detector comprising the system as claimed in any of the preceding Claims.

12. Method of detecting tampering with an item (16) comprising a first member (18) and a second member (20) being movable relative to the first member, the method comprising the steps of:
- attaching a passive electronic sensor (12) to the first member, the passive electronic sensor (12) comprising a sensor identification code storage means (32) and a loading means;
- attaching a first end of a friable electrical connection element (14) to the second member (20); and
- forming a series connection between the second end of the friable electrical connection element (14) and the loading means;
- connecting the sensor identification code storage means (32) to the series connection at a position between the second end of the friable electrical connection element (14) and the loading means, so that movement of the second member relative to the first member causes the friable electrical connection element (14) to break and thereby alter the sensor identification code stored in the sensor identification code storage means (32).

13. Method as claimed in Claim 12 wherein the item is a container (16) comprising a first (18) and a second (20) member ; and wherein the second member is a closing member of the container.

14. Method as claimed in Claim 13 wherein the first end of the friable electrical connection element (14) is attached to the closing member (20) of the container (16) with a glue.

15. Method as claimed in Claim 13 wherein the first end of the friable electrical connection element (14) is attached to the closing member (20) of the container (16) by:
- forming a hole in the closing member (20);
- inserting the first end of the friable electrical connection element (14) into the hole; and
- fixing the first end of the friable electrical connection element (14) in the hole with an epoxy-like cement Material.

## Patentansprüche

1. Manipulations-Erkennungssystem, das Folgendes umfasst:
einen passiven elektronischen Sensor (12), der ein Schaltungsmittel mit drei Knoten (22, 24, 26) umfasst;
eine zwischen dem ersten (22) und zweiten Knoten (24) des Schaltungsmittels angeschlossene Last;
ein Sollbruch-Verbindungsmittel (14), das zwischen dem ersten (24) und dritten Knoten (26) angeschlossen ist; und
ein Mittel (32) zum Speichern eines Erkennungscodes des Sensors (12), das an den zweiten Knoten des Schaltungsmittels angeschlossen ist;
wobei im Betriebszustand eine Spannung zwischen dem ersten und dem dritten Knoten angelegt wird und sich der zweite Knoten auf einer ersten Spannung befindet, wenn das Sollbruch-Verbindungsmittel (14) intakt ist, und auf einer zweiten Spannung befindet, wenn das Sollbruch-Verbindungsmittel unterbrochen ist.

2. System nach Anspruch 1, wobei die erste Spannung im Wesentlichen den Wert Null aufweist.

3. System nach Anspruch 1, wobei die zweite Spannung im Wesentlichen gleich der angelegten Spannung ist.

4. System nach Anspruch 1, wobei es sich bei dem passiven elektronischen Sensor (12) um einen Hochfrequenz-Erkennungssensor handelt.

5. System nach einem der vorangehenden Ansprüche, wobei es sich bei dem elektrischen Sollbruch-Verbindungsmittel (14) um eine Drahtschleife handelt.

6. System nach einem der vorangehenden Ansprüche, wobei das elektrische Sollbruch-Verbindungsmittel (14) an ein Bit des Speichermittels des Sensor-Erkennungscodes angeschlossen ist.

7. System nach Anspruch 6, wobei eine Unterbrechung in dem elektrischen Sollbruch-Verbindungsmittel (14) eine Veränderung der Spannung an dem Speichermittel des Sensor-Erkennungscodes (32) bewirkt, was den Wert seines Bits ändert.

8. System nach Anspruch 6 oder 7, wobei es sich bei dem Bit des Speichermittels des Sensor-Erkennungscodes (32) um das niederwertigste Bit handelt.

9. System nach einem der vorangehenden Ansprüche, wobei der Sensor-Erkennungscode einen geraden Wert aufweist, wenn das Sollbruch-Verbindungsmittel (14) intakt ist, und einen ungeraden Wert aufweist, wenn das Sollbruch-Verbindungsmittel (14) unterbrochen ist.

10. System nach einem der Ansprüche 1 bis 8, wobei der Sensor-Erkennungscode einen ungeraden Wert aufweist, wenn das Sollbruch-Verbindungsmittel (14) intakt ist, und einen geraden Wert aufweist, wenn das Sollbruch-Verbindungsmittel (14) unterbrochen ist.

11. Behälter-Manipulationsdetektor, der das System nach einem der vorangehenden Ansprüche umfasst.

12. Verfahren zur Manipulationserkennung mit einem Artikel (16), der aus einem ersten Element (18) und einem zweiten Element (20) besteht, das relativ zu dem ersten Element beweglich ist, wobei das Verfahren die folgenden Schritte umfasst:
- Anbringen eines ersten passiven elektronischen Sensors (12) an dem ersten Element, wobei der passive elektronische Sensor ein Speichermittel des Sensor-Erkennungscodes (32) und ein Lastmittel umfasst;
- Verbinden eines ersten Endes des elektrischen Sollbruch-Verbindungselements (14) mit dem zweiten Element (20); und
- Ausführen einer Reihenschaltung zwischen dem zweiten Ende des Sollbruch-Verbindungselements (14) und dem Lastmittel;
- Verbinden des Speichermittels des Sensor-Erkennungscodes (32) mit der Reihenschaltung an einer Stelle zwischen dem zweiten Ende des elektrischen Sollbruch-Verbindungselements (14) und dem Lastmittel, sodass die Bewegung des zweiten Elements relativ zu dem ersten Element das Sollbruch-Verbindungselement zerreißt und **dadurch** den Sensor-Erkennungscode verändert, der in dem Speichermittel gespeichert ist (32).

13. Verfahren nach Anspruch 12, wobei es sich bei dem Artikel um einen Behälter (16) handelt, der aus einem ersten (18) und einem zweiten Element (20) besteht; und wobei das zweite Element ein Verschlussteil des Behälters darstellt.

14. Verfahren nach Anspruch 13, wobei das erste Ende des elektrischen Sollbruch-Verbindungselements (14) an dem Verschlussteil (20) des Behälters (16) mit einem Klebstoff befestigt ist.

15. Verfahren nach Anspruch 13, wobei das erste Ende des elektrischen Sollbruch-Verbindungselements (14) an den Verschlussteil (20) des Behälters (16) angebracht ist, indem:
- ein Durchbruch in dem Verschlussteil (20) gebildet wird;
- das erste Ende des elektrischen Sollbruch-Verbindungselements (14) in den Durchbruch eingeführt wird; und
- Fixieren des ersten Endes des elektrischen Sollbruch-Verbindungselements (14) in dem Durchbruch mit einem epoxidartigen Bindemittel.

## Revendications

1. Système de détection de fraude, comprenant :
un capteur électronique (12) passif, incluant des moyens de circuit ayant trois noeuds (22, 24, 26) ;
une charge, connectée entre les premier (22) et deuxième (24) noeuds des moyens de circuit ;
des moyens de connexion (14) friables, connectés entre les deuxième (24) et troisième (26) noeuds ; et
des moyens (32) de stockage d'un code d'identification du capteur (12), connectés au deuxième noeud des moyens de circuit ;
dans lequel, en utilisation, est appliquée sur les premier et troisième noeuds, et dans lequel, lorsque les moyens de connexion (14) friables sont intacts, le deuxième noeud se trouve à une première tension et, lorsque les moyens de connexion (14) friables sont rompus, le deuxième noeud se trouve à une deuxième tension.

2. Système selon la revendication 1, dans lequel la première tension est sensiblement égale à zéro.

3. Système selon la revendication 1, dans lequel la deuxième tension est sensiblement égale à la tension appliquée.

4. Système selon la revendication 1, dans lequel le capteur électronique (12) passif est un capteur d'identification à radio-fréquence.

5. Système selon l'une quelconque des revendications précédentes, dans lequel les moyens de connexion électrique (14) friables sont formés d'une boucle de câble.

6. Système selon l'une quelconque des revendications précédentes, dans lequel les moyens de connexion électrique (14) friables sont susceptibles d'être connectés à un bit des moyens de stockage de code d'identification de capteur (32).

7. Système selon la revendication 6, dans lequel une rupture, dans les moyens de connexion électrique (14) friables, provoque un changement de tension aux moyens de stockage de code d'identification de capteur (32), provoquant un changement de la valeur de son bit.

8. Système selon la revendication 6 ou la revendication 7, dans lequel le bit des moyens de stockage de code d'identification de capteur (32) est le bit le moins significatif.

9. Système selon l'une quelconque des revendications précédentes, dans lequel le code d'identification de capteur présente une valeur paire, lorsque les moyens de connexion (14) friables sont intacts, et valeur impaire, lorsque les moyens de connexion (14) friables sont rompus.

10. Système selon l'une quelconque des revendications 1 à 8, dans lequel le code d'identification de capteur présente une valeur impaire, lorsque les moyens de connexion (14) friables sont intacts, et valeur paire, lorsque les moyens de connexion (14) friables sont rompus.

11. Un détecteur de fraude sur un récipient, comprenant le système tel que revendiqué à l'une quelconque des revendications précédentes.

12. Procédé de détection d'une fraude avec un article (16), comprenant un premier organe (18) et un deuxième organe (20), déplaçable par rapport au premier organe, le procédé comprenant les étapes de :
- fixation d'un capteur électronique (12) passif au premier organe, le capteur électronique (12) passif comprenant des moyens (32) de stockage d'un code d'identification de capteur et des moyens de chargement ;
- fixation d'une première extrémité d'un élément de connexion électrique (14) friable au deuxième organe (20) ; et
- formation d'un branchement en série, entre la deuxième extrémité de l'élément de connexion électrique (14) friable et les moyens de chargement ;
- connexion des moyens (32) de stockage de code d'identification de capteur au branchement en série, à une position située entre la deuxième extrémité de l'élément de connexion électrique (14) friable et les moyens de chargement, de manière qu'un déplacement du deuxième organe, par rapport au premier organe, provoque la rupture de l'élément de connexion électrique (14) friable et, de cette manière, modifie le code d'identification de capteur, stocké dans les moyens (32) de stockage de code d'identification de capteur.

13. Procédé tel que revendiqué à la revendication 12, dans lequel l'article est un récipient (16), comprenant un premier (18) et un deuxième (20) organe ; et
dans lequel le deuxième organe est un organe de fermeture du récipient.

14. Procédé tel que revendiqué à la revendication 13, dans lequel la première extrémité de l'élément de connexion électrique (14) friable est attachée à l'organe de fermeture (20) du récipient (16) par une colle.

15. Procédé tel que revendiqué à la revendication 13, dans lequel la première extrémité de l'élément de connexion électrique (14) friable est attachée à l'organe de fermeture (20) du récipient (16) par :
- formation d'un trou dans l'organe de fermeture (20) ;
- insertion de la première extrémité de l'élément de connexion électrique (14) friable dans le trou ; et
- fixation de la première extrémité de l'élément de connexion électrique (14) friable dans le trou avec un matériau de cimentation, analogue à de l'époxy.
